(19) Europäisches Patentamt
European Patent Office
Office européen des brevets

(11) **EP 1 776 564 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(21) Anmeldenummer: **05764312.4**

(22) Anmeldetag: **09.08.2005**

(51) Int Cl.:
*G01D 5/244* (2006.01)

(86) Internationale Anmeldenummer:
**PCT/EP2005/008647**

(87) Internationale Veröffentlichungsnummer:
**WO 2006/018192 (23.02.2006 Gazette 2006/08)**

(54) **VERFAHREN UND VORRICHTUNG ZUR KORREKTUR SYSTEMATISCHER SPURSIGNALFEHLER VON INKREMENTELLEN POSITIONS- ODER DREHWINKELGEBERN**

METHOD AND DEVICE FOR CORRECTING SYSTEMATIC TRACK SIGNAL ERRORS OF INCREMENTAL POSITION OR ANGLE OF ROTATION SENSORS

PROCEDE ET SYSTEME DE CORRECTION D'ERREURS SYSTEMATIQUES DE SIGNAUX DE PISTE DANS DES CAPTEURS DE POSITION OU D'ANGLE DE ROTATION INCREMENTAUX

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.08.2004 DE 102004039379**

(43) Veröffentlichungstag der Anmeldung:
**25.04.2007 Patentblatt 2007/17**

(73) Patentinhaber: **AeroLas GmbH Aerostatische Lager-Lasertechnik**
**82008 Unterhaching (DE)**

(72) Erfinder: **BRÜCKL, Stefan**
**82041 Deisenhofen (DE)**

(74) Vertreter: **Schlimme, Wolfram**
**Haidgraben 2**
**85521 Ottobrunn (DE)**

(56) Entgegenhaltungen:
**EP-A- 0 489 936       DE-A1- 10 036 090**
**DE-A1- 10 112 352     DE-A1- 10 163 504**
**DE-A1- 19 849 910**

**Beschreibung**

Die Erfindung betrifft ein Verfahren zur Korrektur systematischer Spursignalfehler von inkrementellen Positions- oder Drehwinkelgebern, die zumindest zwei um einen Phasenwinkel verschobene näherungsweise sinusförmige periodengleiche Spursignale erzeugen, sowie eine Vorrichtung zur Durchführung dieses Verfahrens.

Winkel oder Positionen von translatorisch oder rotatorisch angetriebenen Einrichtungen werden häufig mit Hilfe von inkrementalen Lagegebern mit phasenverschobenen, sinusähnlichen Ausgangssignalen erfasst. Diese Lagegeber liefern sogenannte Spursignale x und y, die in der Regel fehlerbehaftet sind. Derartige Geberfehler beruhen beispielsweise auf mechanischen Toleranzen oder Ungenauigkeiten bei der Montage des Lagegebers. Insbesondere bei hochgenauen Antrieben, bei denen eine genaue Positionierung eines angetriebenen Elements erfolgen muss und daher eine exakte Wegerfassung erforderlich ist, wirken sich diese Geberfehler negativ auf die Genauigkeit des gesamten Antriebs aus und sind daher möglichst zu korrigieren.

Die Spursignale x und y lassen sich durch die nachfolgenden Gleichungen beschreiben:

$$x = A_x * \cos(\varepsilon - \Phi) + x_0$$

$$y = A_y * \sin(\varepsilon) + y_0$$

mit

$$A_x = A + d$$

$$A_y = A - d$$

Die Größe A ist dabei die gemeinsame Amplitude beider Sensorsignale. Die Amplitudendifferenz der Signale spiegelt sich in d wider. Die Offsetanteile beider Größen werden mit $x_0$ und $y_0$ bezeichnet. Die Größe $\Phi$ bezeichnet dabei die von idealen 90 Grad abweichende Phasendifferenz der Signale x und y. Mit $\varepsilon$ wird die gesuchte Ortsabhängigkeit der Sensorsignale beschrieben. Die Fehlergrößen A, d, $x_0$, $y_0$ und $\Phi$ sind typischerweise Funktionen von $\varepsilon$, von der Zeit und von weiteren Größen, wie z.B. der aktuellen Verfahrgeschwindigkeit. Man kann davon ausgehen, dass A, $x_0$, $y_0$, d, $\Phi$ über eine Signalperiode annähernd konstant sind und dass zusätzlich $\Phi$ klein ist. Außerdem kann man annehmen, dass $x_0$, $y_0$, d und das Produkt aus A und $\Phi$ sehr viel kleiner als A sind.

Die Geberfehler sind zunächst nicht bekannt und erschweren die genaue Erfassung der gesuchten mechanischen Position $\varepsilon$. Durch Bestimmung von $\varphi = \arctan(y/x)$ wird üblicherweise ein Näherungswert für die gesuchte Ortsabhängigkeit $\varepsilon$ (sog. Feinwert) bestimmt, der aber aufgrund der aufgeführten Offset-, Amplituden- und Phasenfehler fehlerbehaftet ist und vom gesuchten $\varepsilon$ abweicht. Für hochpräzise Antriebe ist man an einer möglichst genauen Messung von $\varepsilon$ interessiert, so dass Korrekturmaßnahmen zu ergreifen sind.

Mit einem derartigen Korrekturverfahren muss es somit möglich sein, die Offsetanteile $x_0$ und $y_0$ zu bestimmen und zu eliminieren, die Amplituden $A_x$ und $A_y$ auf einen gewünschten Wert $A_s$ einzuregeln und die Phasenverschiebung $\Phi$ zu messen und zu beseitigen. Die erhaltenen Fehlergrößen sind derart aufzubereiten, dass Korrekturwerte entstehen, die einer Korrektureinheit zugeführt werden können.

Die Korrektur der Gebersignale wird beispielsweise wie folgt durchgeführt:

$$y' = y_{OAP} = \frac{A_s}{A_y} \bullet (y - y_0) \qquad\qquad \text{[Gleichung 1a]}$$

$$x' = x_{OAP} = \frac{1}{\cos\Phi} \bullet \frac{A_s}{A_x} \bullet (x - x_0) - \tan\Phi \bullet y_{OAP} \approx \frac{A_s}{A_x} \bullet (x - x_0) - \Phi \bullet y_{OAP} \qquad \text{[Gleichung 1b]}$$

Mit x' und y' werden allgemein die korrigierten Gebersignale bezeichnet. Die Größen $x_{OAP}$ und $y_{OAP}$ sind die bezüglich Offset, Amplitude und Phase fehlerkorrigierten Gebersignale.

Durch richtungsabhängiges "Zählen" der Nulldurchgänge der Sensorsignale (UP-/DOWN-Counter) kann weiterhin ein sog. Grobwert ermittelt werden, der zusammen mit dem Feinwert die Gesamtlage ergibt, die z.B. einer Lageregelung des Antriebs zugeführt werden kann.

In der DE 198 49 910 A1 wird gezeigt, dass im Spurbetragssignal $r = \sqrt{x^2 + y^2}$ neben einem Gleichanteil bei Vorhandensein eines Offsetfehlers Oberschwingungsanteile auftreten, die für eine dynamische Offset-Korrektur, bei der auch Drifteffekte erfasst werden, genutzt werden können. Um die Oberschwingungsanteile zu extrahieren, wird die Funktion dr / dφ gebildet. Die Oberschwingungsanteile besitzen hier die gleiche Frequenz wie die Spursignale x und y. Anhand der Amplituden der Oberschwingungsanteile, die bei bestimmten Winkeln φ = arctan(y / x) auftreten, kann auf den Offsetfehler rückgerechnet werden. Andere Fehlerquellen, wie z.B. Amplituden- oder Phasenfehler bleiben hier unberücksichtigt, so dass die erforderliche Korrektur aller Fehlergrößen nicht erfolgt.

In der DE 101 63 504 A1 wird ein Verfahren erläutert, welches ebenfalls mit Hilfe des Spurbetrags r Korrekturwerte ermittelt. Allerdings werden hier im Gegensatz zum Verfahren der DE 198 49 910 A1 Offset-, Phasen- und Amplitudenfehler berücksichtigt, die zu Oberschwingungsanteilen mit einfacher und doppelter Frequenz im Spurbetrag r führen und hier mit Hilfe der Fourieranalyse getrennt werden. Das Verfahren benötigt möglichst äquidistante Messwerte, ansonsten müssen entsprechende Hilfswerte durch Interpolation generiert werden. Nachteilig ist hier der Rechenaufwand für nicht äquidistante Messwerte, die aber in der Praxis z.B. bei Beschleunigungsvorgängen häufig vorkommen. Für die Analyse sind weiterhin Referenzwerte für Sinus- und Cosinus-Signale einfacher und doppelter Frequenz im Vergleich zu den Spursignalen zu generieren, die entweder berechnet oder in Tabellen abgelegt werden müssen. Insgesamt sind der Rechen- und Speicheraufwand hoch.

Ein in der DE 100 36 090 B4 offenbartes Verfahren verwendet ebenfalls den Spurbetrag r zur Korrektur der Amplituden- und Phasenfehler, wobei hier durch Korrelation mit Sinus- und Cosinus-Signalen doppelter Frequenz im Vergleich zu den Spursignalen Größen gebildet werden, die eine automatische Korrektur des Lagegebers erlauben. In einer Rückkopplungsschleife mit Reglern, die Tiefpasscharakteristik aufweisen müssen, wird die jeweilige Korrektur durchgeführt. Die Korrekturen der einzelnen Fehlergrößen beeinflussen sich aber gegenseitig oder es muss die Dynamik der Korrektur reduziert werden.

Vorrichtungen zur Korrektur von systematischen Spursignalfehlern, die Erfassungseinrichtungen, Speichereinrichtungen, Rechner, Steuereinheiten und Ausgaben aufweisen, sind aus der DE 101 12 352 A1, der EP 0 489 936 A, der DE 198 49 910 A1, der DE 101 63 504 A1 und der DE 100 36 090 A1 bekannt.

Aufgabe der Erfindung ist es, ein einfaches Verfahren zur hochgenauen Lagemessung durch Korrektur der Offset-, Amplituden- und Phasenfehler anzugeben. Das Verfahren soll selbstständig und kontinuierlich arbeiten. Der Rechen- und Speicheraufwand soll möglichst gering sein. Auch Korrekturen bei nicht äquidistanten Messwerten, die bei beschleunigten Vorgängen auftreten, sollen auf einfache Weise möglich sein. Die automatische Fehlerkorrektur soll bei Einbettung in einen Lageregelkreis bei elektrischen Antriebssystemen zu keiner negativen Beeinflussung des Lageregelkreises führen, soll also robust und mit hoher Stabilität ausgeführt werden. Weiterhin soll eine Vorrichtung zur Durchführung des Verfahrens angegeben werden.

Die das Verfahren betreffende Aufgabe wird von einem Verfahren mit den Merkmalen des Patentanspruchs 1 gelöst. Dieses Verfahren weist die folgenden Schritte auf:

a) Erfassung der Spursignalwerte ($x_k$, $y_k$) im aktuellen Messzyklus (k);
b) Korrektur der erfassten Spursignalwerte ($x_k$, $y_k$) mit einem gespeicherten Fehlerkorrekturwert ($G_{P-1}$) zum Erhalten von korrigierten Spursignalwerten ($x_k'$, $y_k'$);
c) Transformation der korrigierten Spursignalwerte ($x_k'$, $y_k'$) in Polarkoordinatenwerte ($r_k$; $φ_k$);
d) Bildung eines Fehlerradius' ($r_{ek}$);
e) Gewichtung des Fehlerradius' ($r_{ek}$) mit einer Bewertungsgröße ($w_k$) zum Erhalten einer gewichteten Fehlergröße ($u_k$);
f) Bildung einer Winkeldifferenz ($\Delta φ_k$) aus dem aus der Transformation erhaltenen Winkel ($φ_k$) und einem in einem vorhergehenden Messzyklus (k-1) erhaltenen und gespeicherten Winkel ($φ_{k-1}$);
g) Multiplikation der gewichteten Fehlergröße ($u_k$) mit der Winkeldifferenz ($\Delta φ_k$) zum Erhalten eines Flächenwerts ($F_k$);
h) Addition des ermittelten Flächenwerts ($F_k$) und eines in einem vorhergehenden Messzyklus (k-1) gespeicherten Flächensummenwerts ($F_{S\,k-1}$) zur Bildung eines neuen Flächensummenwerts ($F_{S\,k}$);
i) Speichern des neuen Flächensummenwerts ($F_{S\,k}$) und des Winkels ($φ_k$);
k) Wiederholen der Schritte a) bis i) bis zum Ablauf eines Korrekturintervalls (P), das eine oder mehrere Perioden der Spursignale umfasst;
l) Speichern des Flächensummenwerts ($F_{S\,k}$) am Ende des Korrekturintervalls (P) als neuen Fehlerkorrekturwert

($G_P$).

Die spezielle Ausgestaltung des erfindungsgemäßen Verfahrens erlaubt eine sehr einfache und sehr genaue Korrektur der Geberfehler. Das Verfahren kann sehr vorteilhaft auf digitalen Recheneinheiten wie digitalen Signalprozessoren (DSP), programmierbaren Logikbausteinen (PLD) oder ASICs, implementiert werden. Bei letzteren wird der Algorithmus direkt in Hardware abgebildet.

Vorzugsweise ist das Verfahren weitergebildet durch den Schritt:

m) Wiederholen der Schritte a) bis 1) für das nächste Korrekturintervall (P+1).

Eine weitere Lösung der erfindungsgemäßen Aufgabe wird geschaffen durch ein Verfahren mit den folgenden Schritten:

a) Erfassung der Spursignalwerte ($x_k$, $y_k$) im aktuellen Meßzyklus (k);
b) Korrektur der erfaßten Spursignalwerte ($x_k$, $y_k$) mit einem gespeicherten Fehlerkorrekturwert ($G_{P-1}$) zum Erhalten von korrigierten Spursignalwerten ($x_{k'}$, $y_{k'}$);
c) Transformation der korrigierten Spursignalwerte ($x_{k'}$, $y_{k'}$) in Polarkoordinatenwerte ($r_k$; $\varphi_k$);
d) Bildung eines Fehlerradius' ($r_{ek}$);
e) Gewichtung des Fehlerradius' ($r_{ek}$) mit einer Bewertungsgröße ($w_k$) zum Erhalten einer gewichteten Fehlergröße ($u_k$);
f) Bildung einer Winkeldifferenz ($\Delta\varphi_k$) aus dem aus der Transformation erhaltenen Winkel ($\varphi_k$) und einem in einem vorhergehenden Meßzyklus (k-1) erhaltenen und gespeicherten Winkel ($\varphi_{k-1}$);
g) Multiplikation der gewichteten Fehlergröße ($u_k$) mit der Winkeldifferenz ($\Delta\varphi_k$) zum Erhalten eines Flächenwerts ($F_k$);
h) Addition des ermittelten Flächenwerts ($F_k$) und eines in einem vorhergehenden Meßzyklus (k-1) gespeicherten Flächensummenwerts ($F_{S\,k-1}$) zur Bildung eines neuen Flächensummenwerts ($F_{S\,k}$);
i) Speichern des neuen Flächensummenwerts ($F_{S\,k}$) und des Winkels ($\varphi_k$);
k) Wiederholen der Schritte a) bis i) bis zum Ablauf eines Korrekturintervalls (P), das eine oder mehrere Perioden der Spursignale umfasst;
l1) Addieren des Flächensummenwerts ($F_{S\,k}$) am Ende des Korrekturintervalls (P) zum gespeicherten Fehlerkorrekturwert ($G_{P-1}$), um einen neuen Fehlerkorrekturwert ($G_p$) zu erhalten.;
l2) Speichern den neuen Fehlerkorrekturwert ($G_P$).

In einer bevorzugten Weiterbildung dieses Verfahrens sind zusätzlich die folgenden Schritte vorgesehen:

13) Zurücksetzen des Flächensummenwerts ($F_{S\,k}$) auf Null;
m) Wiederholen der Schritte a) bis 13) für das nächste Korrekturintervall (P+1).

Vorteilhaft ist, wenn zur Korrektur von Phasenfehlern der Spursignale die Bewertungsgröße ($w_k$) durch das Produkt der korrigierten Spursignalwerte ($x_k'$, $y_k'$) gebildet wird.

Zur Korrektur von Offsetfehlern der Spursignale entspricht die Bewertungsgröße ($w_k$) vorteilhafterweise dem jeweiligen korrigierten Spursignalwert ($x_k'$ bzw. $y_k'$).

Zur Korrektur von Amplitudenfehlern der Spursignale werden gleichzeitig zwei Fehlerkorrekturwerte ($G_1$, $G_2$) ermittelt, wobei zur Ermittlung des ersten Fehlerkorrekturwerts ($G_1$) die Bewertungsgröße ($w_{k1}$) aus einer linearen Funktion der Quadrate der korrigierten Spursignalwerte ($x_k'^2$ und $y_k'^2$) gebildet wird ($w_{k1} = a \cdot x_k'^2 + b \cdot y_k'^2 + c$) und wobei zur Ermittlung des zweiten Fehlerkorrekturwerts ($G_2$) die Bewertungsgröße ($w_{k2}$) gleich eins gesetzt wird ($w_{k2} = 1$).

Bevorzugterweise wird dabei die lineare Funktion durch eine Differenz der Quadrate der Spursignalwerte gebildet ($w_{k1} = x_k'^2 - y_k'^2$).

Die Korrekturen von Phasenfehler, Offsetfehler und Amplitudenfehler können entweder zeitlich parallel durchgeführt werden oder zeitlich nacheinander.

Vorzugsweise wird die Transformation von kartesischen Koordinaten in Polarkoordinaten im jeweiligen Schritt c) mittels eines CORDIC-Algorithmus durchgeführt.

In einer bevorzugten Weiterbildung des Verfahrens werden die Spursignalwerte einem Analog-Digital-Umsetzer mit Sigma-Delta-Charakteristik zugeführt und die Korrektur der Spursignalwerte erfolgt mit von diesem Umsetzer gelieferten Werten.

Vorteilhaft ist auch, wenn die Fehlerkorrekturwerte ($G_P$) positionsabhängig in einer Tabelle abgespeichert werden und wenn die Korrektur in einem oder mehreren folgenden Meßzyklen anhand der gespeicherten Tabellenwerte durchgeführt wird.

Vorzugsweise erfolgt die Bildung des Fehlerradius' durch eine Differenz zwischen einem vorgegebenen Sollradius und dem aus der Transformation in Schritt c erhaltenen Radius. Alternativ kann die Bildung des Fehlerradius' auch durch eine Filterung des Radius erfolgen, z.B. eine Tiefpassfilterung.

Zur Lösung der die Vorrichtung betreffenden Aufgabe wird eine Vorrichtung zur Korrektur von systematischen Spursignalfehlern von inkrementellen Positions- oder Drehwinkelgebern geschaffen, die ausgestattet ist mit zumindest einer Erfassungseinrichtung für die Spursignalwerte, einer ersten Speichereinrichtung zur Speicherung der Fehlersummenwerte, einer zweiten Speichereinrichtung zur Speicherung der Fehlerkorrekturwerte, einer Rechnereinheit zur Verarbeitung und zur Korrektur der Spursignalwerte, einer Steuereinheit zur Steuerung der Speicherbelegung und einer Ausgabeeinrichtung für die korrigierten Spursignalwerte.

Vorzugsweise umfasst die Steuereinheit einen Periodenzähler.

Besonders bevorzugt ist dabei der Periodenzähler als Nulldurchgangszähler ausgebildet, der die Nulldurchgänge der Spursignale erfasst.

Die Erfindung wird nachfolgend anhand von Beispielen unter Bezugnahme auf die Zeichnung näher erläutert. In dieser zeigt:

**Fig. 1** Ein Beispiel zur Offsetbestimmung;
**Fig. 2** Ein Flussdiagramm eines ersten Verfahrensablaufs gemäß der vorliegenden Erfindung;
**Fig. 3** Ein Flussdiagramm eines zweiten Verfahrensablaufs gemäß der vorliegenden Erfindung;
**Fig. 4** Ein Prinzipschaltbild einer erfindungsgemäßen Vorrichtung zur Offsetfehlerkorrektur;
**Fig. 5** Ein Prinzipschaltbild der Summationseinheit einer erfindungsgemäßen Vorrichtung;
**Fig. 6.** Ein Ausführungsbeispiel der erfindungsgemäßen Vorrichtung zur Korrektur aller Fehler;

Beim Verfahren der Erfindung werden zunächst die Messwerte der Spursignale (Encoderwerte) von kartesischen Koordinaten in Polarkoordinaten mit einem Radius r und Winkel $\varphi$ transformiert. Die Rechenvorschriften dafür lauten:

$$r = \sqrt{x^2 + y^2} \qquad\qquad \text{[Gleichung 2]}$$

$$\varphi = \arctan(y / x) \qquad\qquad \text{[Gleichung 3]}$$

Nur wenn keine Fehler vorhanden sind, ist der Radius r konstant (r = A) und keine Funktion des Winkels $\varepsilon$. Andernfalls sind Oberschwingungsanteile mit einfacher und doppelter Frequenz im Vergleich zur Frequenz der Spursignale vorhanden, die mit einer Fourieranalyse analysiert werden können. Dazu benötigt man die Funktionen $\cos(\varepsilon)$, $\sin(\varepsilon)$, $\cos(2\varepsilon)$ und $\sin(2\varepsilon)$, die jedoch nicht exakt berechnet werden können, da $\varepsilon$ nicht bekannt ist. Darüber hinaus möchte man den erforderlichen Rechenaufwand möglichst gering halten. Unter der in der praktischen Anwendung realistischen Annahme kleiner Geberfehler werden zur Analyse der Fehler vereinfachend direkt aus den Spursignalen x und y gebildete Funktionen abgeleitet:

$\cos(\varepsilon)$ wird ersetzt durch x
$\sin(\varepsilon)$ wird ersetzt durch y
$\cos(2\varepsilon)$ wird ersetzt durch $x^2 - y^2$
$\sin(2\varepsilon)$ wird ersetzt durch $x * y$

Für die Realisierung erweist es sich aus mehreren Gründen als günstig, wenn anstelle des Radius r die Differenz aus einem Sollradius $r_s$ (entspricht Wunschamplitude $A_s$) und dem aktuellem Radius r, also ein Regelfehler, gebildet wird. Dadurch ergibt sich folgender Ansatz zur Bestimmung der Fehler:

$$G_{x_0} = \int_{\varepsilon_0}^{\varepsilon_I = \varepsilon_0 + 2\pi} (r_s - r) * x \, d\varepsilon \approx -\pi * A * x_0$$

$$G_{y_0} = \int\limits_{\varepsilon_0}^{\varepsilon_1=\varepsilon_0+2\pi} (r_s - r) * y \, d\varepsilon \approx -\pi * A * y_0$$

$$G_d = \int\limits_{\varepsilon_0}^{\varepsilon_1=\varepsilon_0+2\pi} (r_s - r) * (x^2 - y^2) \, d\varepsilon \approx -\pi * A^2 * d$$

$$G_\Phi = \int\limits_{\varepsilon_0}^{\varepsilon_1=\varepsilon_0+2\pi} (r_s - r) * x * y \, d\varepsilon \approx -\frac{1}{4}\pi * A^3 * \Phi$$

$$G_A = \int\limits_{\varepsilon_0}^{\varepsilon_1=\varepsilon_0+2\pi} (r_s - r) \, d\varepsilon \approx 2\pi(r_s - A)$$

$G_{x0}$ ist dabei ein Maß für den Offset-Fehler $x_0$.
$G_{y0}$ ist dabei ein Maß für den Offset-Fehler $y_0$.
$G_d$ ist dabei ein Maß für die Amplitudendifferenz d.
$G_y$ ist dabei ein Maß für den Phasenfehler y.
$G_A$ ist dabei ein Maß für die Amplitude A.

Für den Fall, dass bei der Fehlerbestimmung jeweils nur der zu bestimmende Fehler vorhanden ist und alle weiteren Fehler vernachlässigbar sind, gilt für die zu integrierenden Funktionen mit guter Näherung:

$$(r_s - r) * x \approx -\frac{1}{2} x_0 A * (1 + \cos 2\varepsilon)$$

$$(r_s - r) * y \approx -\frac{1}{2} y_0 A * (1 - \cos 2\varepsilon)$$

$$(r_s - r) * (x^2 - y^2) \approx -\frac{1}{2} d A^2 * (1 + \cos 4\varepsilon)$$

$$(r_s - r) * x * y \approx -\frac{1}{8} \Phi A^3 * (1 - \cos 4\varepsilon)$$

$$(r_s - r) \approx r_s - A$$

Im praktischen Betrieb treten alle Fehler meist gleichzeitig auf, so dass dann weitere Abhängigkeiten hinzukommen.

Man erkennt aus obigen Gleichungen, dass die Amplituden der zu integrierenden Funktionen proportional zum jeweiligen Fehler sind und für den Fall gegen Null strebender Fehler nahezu verschwinden. Bei Integration (Mittelwertbildung) fallen die trigonometrischen Anteile heraus, so dass die gesuchten Fehleranteile übrig bleiben. Auch jede andere Art von TiefpassFilterung ist prinzipiell geeignet, um die Fehler zu extrahieren.

Bei Berechnung der unbestimmten Integrale wird der grobe Verlauf der Integration über dem Winkel deutlich:

$$G_{x_0}(\varepsilon) = \int (r_s - r) * x \, d\varepsilon \approx -\frac{1}{2} A * x_0 * (\varepsilon + \frac{1}{2} \sin 2\varepsilon)$$

$$G_{y_0}(\varepsilon) = \int (r_s - r) * y \, d\varepsilon \approx -\frac{1}{2} A * y_0 * (\varepsilon - \frac{1}{2} \sin 2\varepsilon)$$

$$G_{d}(\varepsilon) = \int (r_s - r) * (x^2 - y^2) \, d\varepsilon \approx -\frac{1}{2} A^2 * d * (\varepsilon + \frac{1}{4} \sin 4\varepsilon)$$

$$G_{\Phi}(\varepsilon) = \int (r_s - r) * x * y \, d\varepsilon \approx -\frac{1}{8} A^3 * \Phi * (\varepsilon - \frac{1}{4} \sin 4\varepsilon)$$

$$G_{A}(\varepsilon) = \int (r_s - r) \, d\varepsilon \approx 2\pi (r_s - A) * \varepsilon$$

Im wesentlichen ist der Verlauf also jeweils linear über den Winkel $\varepsilon$, allerdings mit überlagerten trigonometrischen Funktionen. Treten mehrere Fehler gleichzeitig auf, so weicht der Verlauf möglicherweise erheblich von der in erster Näherung linearen Form ab. Wird über ein Vielfaches einer vollen Signalperiode integriert, dann sind die Sinusfunktionen jeweils Null und fallen heraus. Auch Einflüsse andere Fehler, wie z.B. Amplitudenfehler bei der Offsetbestimmung, werden dann in ihrer Auswirkung reduziert.

Üblicherweise wird man die Fehlerberechnung zeitdiskret ausführen. Die Integrale gehen dann in Summen über (mit dem Zeitzähler k). Obwohl die Berechnung auch mit dem Winkel $\varphi$ durchgeführt werden kann, wird dieser zur Vereinfachung der Berechnung normiert. Mit diesem normierten Winkel $\alpha = \varphi/2\pi$ folgt:

$$G_{x_0} = \sum_{k=k_0}^{k_1} (r_s - r(k)) * x(k) * (\alpha(k) - \alpha(k-1)) \approx -\frac{1}{2} A * x_0 \qquad \text{[Gleichung 4a]}$$

$$G_{y_0} = \sum_{k=k_0}^{k_1} (r_s - r(k)) * y(k) * (\alpha(k) - \alpha(k-1)) \approx -\frac{1}{2} A * y_0 \qquad \text{[Gleichung 4b]}$$

$$G_{d} = \sum_{k=k_0}^{k_1} (r_s - r(k)) * (x^2(k) - y^2(k)) * (\alpha(k) - \alpha(k-1)) \approx -\frac{1}{2} A^2 * d \qquad \text{[Gleichung 4c]}$$

$$G_{\Phi} = \sum_{k=k_0}^{k_1} (r_s - r(k)) * x(k) * y(k) * (\alpha(k) - \alpha(k-1)) \approx -\frac{1}{8} A^3 * \Phi \qquad \text{[Gleichung 4d]}$$

$$G_A = \sum_{k=k_0}^{k_1} (r_s - r(k)) * (\alpha(k) - \alpha(k-1)) \approx r_s - A \qquad \text{[Gleichung 4e]}$$

Beispiel einer Offsetbestimmung:

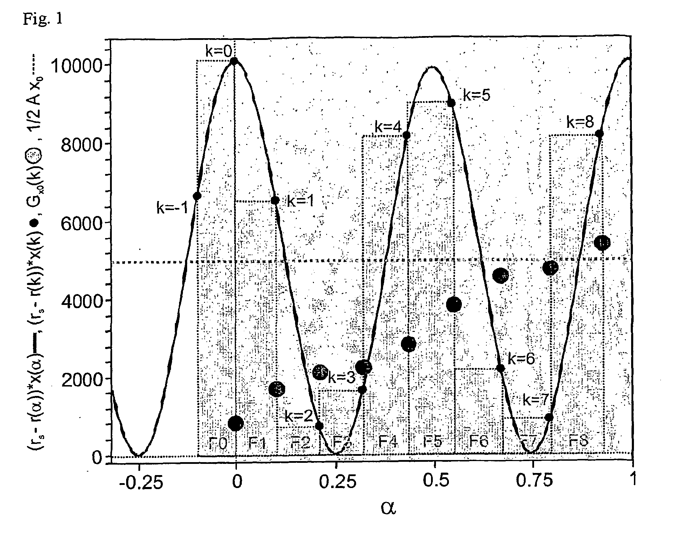

In diesem Fall wird die Summation, wie in Gleichung 4a dargestellt, über $(r_S - r)^* \times *(\alpha(k) - \alpha(k-1))$ durchgeführt. In Fig. 1 ist die Offsetberechnung graphisch beispielhaft ausgeführt. Angenommen wird ein Gebersignal mit einer Amplitude von A = 1000 und mit einem Offset von $x_0$ = 10. Es wird von einem beschleunigten Bewegungsvorgang ausgegangen, d.h. die Messwerte sind bei konstanten Abtastintervallen nicht äquidistant im Winkel $\alpha$. Der Integrationszeitraum ist in Fig. 1 grau hinterlegt. Insgesamt fallen neun Messwerte zu den Zeitpunkten k=0 bis k=8 in den Integrations- bzw. Summationshorizont. Zur Berechnung des ersten Flächenwerts

$$F(0) = (r_S - r(0)) * x(0) * (\alpha(0) - \alpha(-1))$$

wird der Winkelwert $\alpha(-1)$ zum Zeitpunkt k = -1 außerhalb des Integrationszeitraums benötigt. Für alle weiteren Flächenwerte

$$F(k) = (r_S - r(k)) * x(k) * (\alpha(k) - \alpha(k-1))$$

werden nur Signal- und Winkelwerte innerhalb des Integrationszeitraums verwendet. Der gesuchte Offset-Fehlerkorrekturwert wird durch Summation aller Flächenwerte F(k) ermittelt:

$$G_{x_0} = \sum_{k=0}^{k_1=8} F(k) = \sum_{k=0}^{k_1=8} (r_S - r(k)) * x(k) * (\alpha(k) - \alpha(k-1))$$

In Fig. 1 ist zu erkennen, dass hier ein kleiner Fehler von ca. 7 % bei der numerischen Integration auftritt, da der exakte Wert von $\frac{1}{2} A x_0$ knapp verfehlt wird. Beim Verfahren der Erfindung ist die Peak-to-Peak-Amplitude des zu integrierenden Signals proportional zum gesuchten Offset $x_0$, was die numerische Robustheit und Genauigkeit dieses erfindungsgemäßen Verfahrens selbst bei wenigen Messwerten erklärt. Allerdings bleibt zu berücksichtigen, dass im Radius r weitere Fehlerquellen enthalten sein können, die das Integrationsergebnis unter Umständen erheblich beeinträchtigen. Aus diesem Grund kann beim erfindungsgemäßen Verfahren die Bestimmung der Fehlergrößen rekursiv durchgeführt werden, um die Fehlerbestimmung iterativ mit jedem Schritt zu verbessern.

Im Folgenden wird das erfindungsgemäße Verfahren der Korrektur nochmals abstrakt im Einzelnen beschrieben. Ausgangspunkt sind die bereits abgeleiteten Formeln zur Berechnung der Fehler, die immer folgenden Aufbau besitzen:

$$G = \sum_{k=k_0}^{k_1} (r_s - r(k)) * w(k) * (\alpha(k) - \alpha(k-1)) = \sum_{k=k_0}^{k_1} u(k) * \Delta\alpha(k) = \sum_{k=k_0}^{k_1} F(k)$$

Es werden also jeweils die Regeldifferenz

$$(r_s - r(k)) \qquad\qquad \text{[Gleichung 5]}$$

und die Winkeldifferenz

$$\Delta\alpha(k) = \alpha(k) - \alpha(k-1) \qquad\qquad \text{[Gleichung 6]}$$

benötigt, sowie eine Funktion, mit der die Regeldifferenz bewertet wird. Diese Bewertungsfunktion wird mit w(k) bezeichnet und entspricht z.B. x(k) oder y(k) im Falle der Offsetbestimmung, also

$$w(k) = x(k) \qquad \text{für Offsetbestimmung } x_0 \qquad\qquad \text{[Gleichung 7a]}$$

$$w(k) = y(k) \qquad \text{für Offsetbestimmung } y_0 \qquad\qquad \text{[Gleichung 7b]}$$

$$w(k) = x^2(k) - y^2(k) \quad \text{für Amplitudendifferenzbestimmung d} \qquad\qquad \text{[Gleichung 7c]}$$

$$w(k) = x(k) * y(k) \qquad \text{für Phasenbestimmung } \Phi \qquad\qquad \text{[Gleichung 7d]}$$

$$w(k) = 1 \qquad\qquad \text{für Amplitudenbestimmung A} \qquad\qquad \text{[Gleichung 7e]}$$

Mit der Gleichung

$$u(k) = (r_s - r(k)) * w(k) \qquad\qquad \text{[Gleichung 8]}$$

wird die gewichtete Fehlergröße u(k) ermittelt. Schließlich folgt für die bereits bekannten Flächenwerte F(k), deren Summe zu bestimmen ist:

$$F(k) = u(k) * \Delta\alpha(k) \qquad\qquad \text{[Gleichung 9]}$$

Die Formeln zur Berechnung aller Fehlerkorrekturwerte lassen sich auf diese Weise als Integralsumme ausdrücken:

$$G = \sum_{k=k_0}^{k_1} F(k)$$

Die Fehlerberechnung und Korrektur soll nun auf Basis von bereits teilkorrigierten Spursignalen $x_{OAP}$ und $y_{OAP}$ erfolgen, die dann Funktionen der Fehlerkorrekturwerte sind:

$$x_{OAP} = f(x, G_{x_0}, G_A, G_d, G_\Phi)$$

$$y_{OAP} = f(y, G_{y_0}, G_A, G_d)$$

Die gewichtete Fehlergröße u ebenso wie die Winkeldifferenz $\Delta\alpha$ sind dann nicht nur Funktionen der Zeit k, sondern auch von $x_{OAP}$ und $y_{OAP}$:

$$u = u(k, x_{OAP}, y_{OAP})$$

$$\Delta\alpha = \Delta\alpha(k, x_{OAP}, y_{OAP})$$
.

Auch die Flächenwerte $F_k$ sind dann natürlich von $x_{OAP}$ und $y_{OAP}$ abhängig.

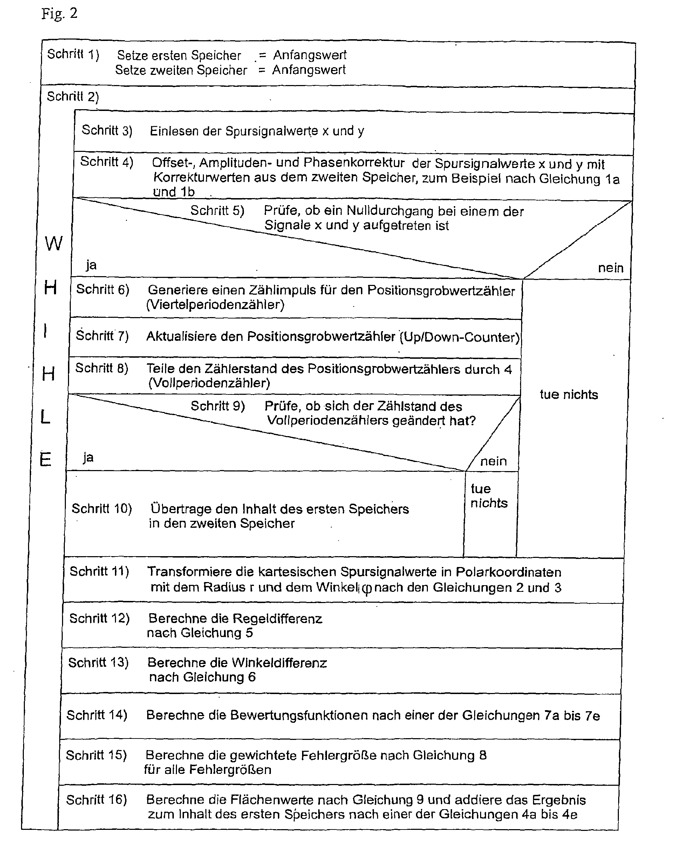

Der Ablauf der iterativen Berechnung gemäß einem ersten Verfahren (Anspruch 1 und Anspruch 2) ist in Fig. 2 beispielhaft dargestellt und wird im folgenden erläutert:

Schritt 1:   Setze ersten Speicher = Anfangswert, Setze zweiten Speicher = Anfangswert Für das Verfahren werden zwei Speicher benötigt, die aus jeweils fünf Speicherzellen entsprechend den fünf Korrekturkreisen für Offset $x_0$ und $y_0$, Amplitude A und Amplitudendifferenz d sowie Phase $\varphi$ bestehen. Der erste Speicher beinhaltet dabei die Flächensummenwerte ($F_{sk}$); der zweite Speicher übernimmt am Ende einer Periode den jeweiligen Flächensummenwert ($F_{sk}$) aus dem ersten Speicher und speichert ihn als Fehlerkorrekturwert Gp. Die Speicher werden bei Start des Verfahrens auf einen Anfangswert, z.B. Null, gesetzt.

Schritt 2:   While-Schleife
Der Korrekturalgorithmus kann solange ausgeführt werden, bis z.B. der Regelfehler einen vorgegebenen Schwellenwert unterschritten hat. Er kann aber auch ständig ausgeführt werden, z.B. bis zum Beenden der Lageregelung eines Antriebssystems.

Schritt 3:   Einlesen der Spursignalwerte x und y.

Schritt 4:   Offset-, Amplituden- und Phasenkorrektur der Spursignalwerte x und y mit den Fehlerkorrekturwerten aus dem zweiten Speicher, zum Beispiel nach Gleichung 1a und 1b.
Alle weiteren Berechnungen werden mit den teilkorrigierten Gebersignalen durchgeführt. Aus den teilkorrigierten Gebersignalen kann im weiteren die gesuchte Position z.B. für Regelungszwecke berechnet werden.

Schritt 5:   Prüfe, ob ein Nulldurchgang bei einem der Signale x und y aufgetreten ist Anhand des Nulldurchgangs kann eine Synchronisation mit dem Summationsalgorithmus erfolgen. Dabei werden der erste Speicher und der zweite Speicher entsprechend gesteuert (Reset, Datenübernahme usw.).

Schritt 6:   Generiere einen Zählimpuls für den Positionsgrobwertzähler (Viertelperiodenzähler)

Schritt 7:   Aktualisiere den Positionsgrobwertzähler (UP/DOWN-Counter).

Schritt 8:   Teile den Zählerstand des Positionsgrobwertzählers durch vier (Vollperiodenzähler).

Schritt 9:   Prüfe, ob sich der Zählstand des Vollperiodenzählers geändert hat.

Schritt 10:   Übertrage den Inhalt des ersten Speichers in den zweiten Speicher.

Schritt 11:   Transformiere die kartesischen Spursignalwerte in Polarkoordinaten mit dem Radius r und dem Winkel $\varphi$ nach den Gleichungen 2 und 3.

Schritt 12:   Berechne die Regeldifferenz nach Gleichung 5.

Schritt 13:   Berechne die Winkeldifferenz nach Gleichung 6.

Schritt 14:   Berechne die Bewertungsfunktionen für alle Fehlergrößen nach den Gleichungen 7a bis 7e.

Schritt 15:   Berechne die gewichtete Fehlergröße für alle Fehlergrößen nach Gleichung 8.

Schritt 16:   Berechne die Flächenwerte nach Gleichung 9 und addiere das Ergebnis zum Inhalt des ersten Speichers nach einer der Gleichungen 4a bis 4e.

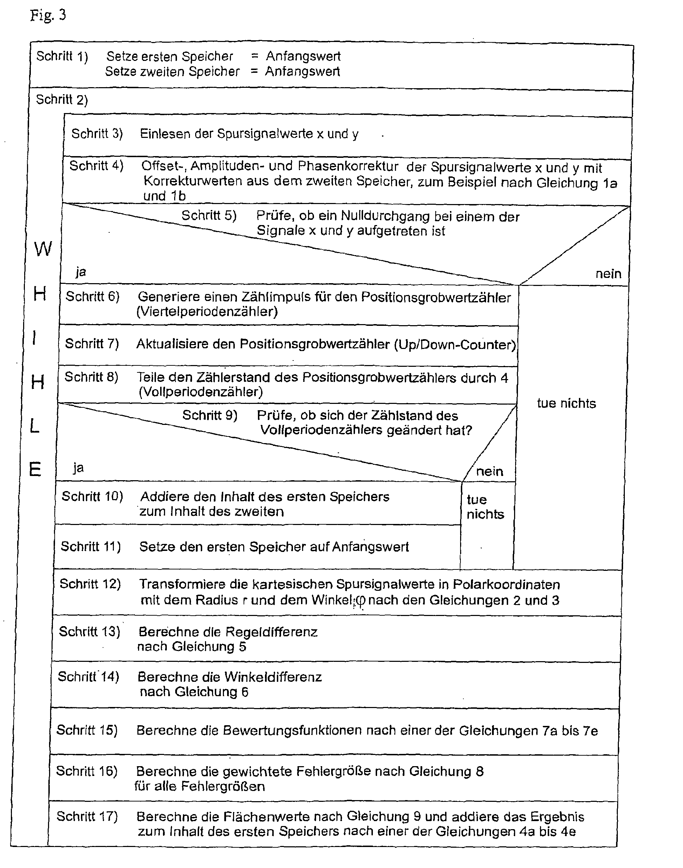

Der Ablauf der iterativen Berechnung gemäß einem zweiten Verfahren (Anspruch 3 und Anspruch 4) ist beispielhaft in Fig. 3 dargestellt und wird im folgenden erläutert:

Schritt 1:  Setze ersten Speicher = Anfangswert, Setze zweiten Speicher = Anfangswert Für das Verfahren werden zwei Speicher benötigt, die aus jeweils fünf Speicherzellen entsprechend den fünf Korrekturkreisen für Offset $x_0$ und $y_0$, Amplitude A und Amplitudendifferenz d sowie Phase φ bestehen. Der erste Speicher beinhaltet dabei die Flächensummenwerte ($F_{sk}$). Die Speicher werden bei Start des Verfahrens auf einen Anfangswert, z.B. Null, gesetzt.

Schritt 2:  While-Schleife Der Korrekturalgorithmus kann solange ausgeführt werden, bis z.B. der Regelfehler einen vorgegebenen Schwellenwert unterschritten hat. Er kann aber auch ständig ausgeführt werden, z.B. bis zum Beenden der Lageregelung eines Antriebssystems.

Schritt 3:  Einlesen der Spursignalwerte x und y.

Schritt 4:  Offset-, Amplituden- und Phasenkorrektur der Spursignalwerte x und y mit den Fehlerkorrekturwerten aus dem zweiten Speicher.
Alle weiteren Berechnungen werden mit den teilkorrigierten Gebersignalen durchgeführt. Aus den teilkorrigierten Gebersignalen kann im weiteren die gesuchte Position z.B. für Regelungszwecke berechnet werden.

Schritt 5:  Prüfe, ob ein Nulldurchgang bei einem der Signale x und y aufgetreten ist Anhand des Nulldurchgangs kann eine Synchronisation mit dem Summationsalgorithmus erfolgen. Dabei werden der erste Speicher und der zweite Speicher entsprechend gesteuert (Reset, Datenübernahme usw.).

Schritt 6:  Generiere einen Zählimpuls für den Positionsgrobwertzähler (Viertelperiodenzähler)

Schritt 7:  Aktualisiere den Positionsgrobwertzähler (UP/DOWN-Counter).

Schritt 8:  Teile den Zählerstand des Positionsgrobwertzählers durch vier (Vollperiodenzähler).

Schritt 9:  Prüfe, ob sich der Zählstand des Vollperiodenzählers geändert hat.

Schritt 10:  Addiere den Inhalt des ersten Speichers zum Inhalt des zweiten Speichers.

Schritt 11:  Setze den ersten Speicher auf Anfangswert.

Schritt 12:  Transformiere die kartesischen Spursignalwerte in Polarkoordinaten mit dem Radius r und dem Winkel φ nach den Gleichungen 2 und 3.

Schritt 13:  Berechne die Regeldifferenz nach Gleichung 5.

Schritt 14:  Berechne die Winkeldifferenz nach Gleichung 6.

Schritt 15:  Berechne die Bewertungsfunktionen für alle Fehlergrößen nach den Gleichungen 7a bis 7e.

Schritt 16:  Berechne die gewichtete Fehlergröße für alle Fehlergröße nach Gleichung 8.

Schritt 17:  Berechne die Flächenwerte nach Gleichung 9 und addiere das Ergebnis zum Inhalt des ersten Speichers nach einer der Gleichungen 4a bis 4e.

Die Fehlerberechnung kann iterativ anhand der immer gleichen Signalperiode(n) durchgeführt werden oder aber man schätzt die Fehler von Signalperioden auf Basis der Korrekturwerte benachbarter Perioden, die gute Startwerte des iterativen Verfahrens darstellen, da sich die Fehler innerhalb weniger Perioden nur gering verändern.

Die Fehlerberechnung kann solange fortgeführt werden bis der Regelfehler $r_S$ - r verschwindend klein wird. Die Berechnung kann aber auch ständig ausgeführt werden, da sich bei verschwindendem Regelfehler stationäre Endwerte der Korrekturwerte einstellen. Alle Fehler sind dann nahezu exakt berechnet. Die Korrektur beseitigt alle Offset-, Amplituden- und Phasenfehler im Wesentlichen praktisch vollständig.

Vor der Korrektur können die Korrekturwerte mit einem Verstärkungsfaktor beaufschlagt werden, um die Dynamik der Korrektur zu beeinflussen.

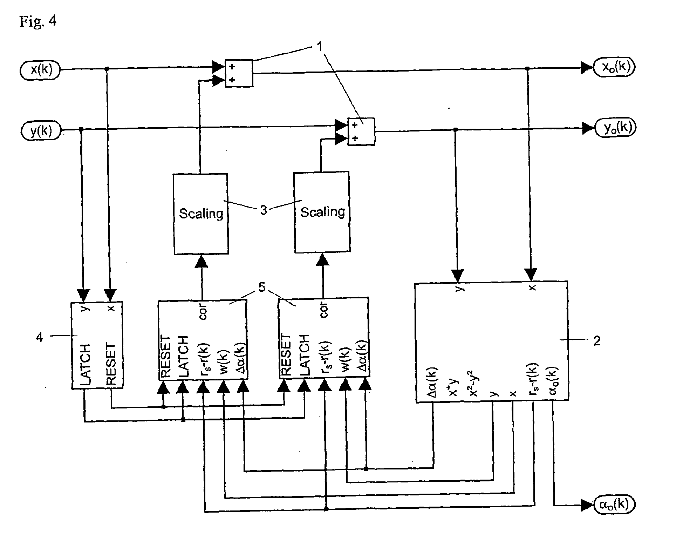

Die konkrete Ausführung der Korrektur wird zunächst anhand der Offsetkorrektur nach Fig. 4 erläutert. Darin bezeichnen x(k) und y(k) die aktuellen, nicht korrigierten Spursignale, während mit $x_O(k)$ und $y_O(k)$ die Spursignale nach Offset-Korrektur bezeichnet werden. Mit Hilfe des Korrekturblocks 1 werden die Offsetfehler durch Addition/Subtraktion beseitigt. Im Berechnungsblock 2 werden der Radius r nach bekannter Vorschrift und der Regelfehler $r_S$ -r(k) (mit dem Sollwert $r_S$) berechnet. Ebenso werden die zur Berechnung aller Fehlerkorrekturwerte benötigten Größen x, y, $x^2$ - $y^2$, x * y entweder einfach durchgeschleift oder ebenfalls berechnet. Zur Offsetkorrektur werden die Größen $x^2$ - $y^2$ und x * y nicht benötigt, deshalb werden diese nicht verwendet; diese Größen werden nur für die Amplituden- und Phasenkorrektur verwendet. Mit $\Delta\alpha(k)$ wird wieder die aktuelle Winkeldifferenz bezeichnet, die mit Hilfe einer arctan-Berechnung, wie bereits gezeigt, berechnet werden kann. Alle Größen des Blocks 2 werden aus zumindest teilkorrigierten Gebersignalen (Spursignalwerte) berechnet.

Mit $\alpha_O(k)$ steht der offsetkorrigierte Winkelwert zur Verfügung, der für die Ermittlung der Gesamtposition verwendet werden kann. Die rekursive Schätzung der skalierten Offsetwerte $x_0$ und $y_0$ erfolgt in den Summationseinheiten 5. Über Skalierungseinheiten 3 wirken die Schätzwerte auf die Korrektureinheiten 1 ein. Im Block 3 können Verstärkungsfaktoren aufgebracht werden, um die Korrektur zu beeinflussen. Die beiden Summationseinheiten 5 werden über die Steuereinheit 4 beeinflusst, die unter anderem vorgibt, zu welchem Zeitpunkt die Korrekturwerte auf die Korrektureinheit 1 einwirken ("Latch") oder zu welchem Zeitpunkt die in der Summationseinheit 5 enthaltenen Speicher auf Null gesetzt werden ("Reset").

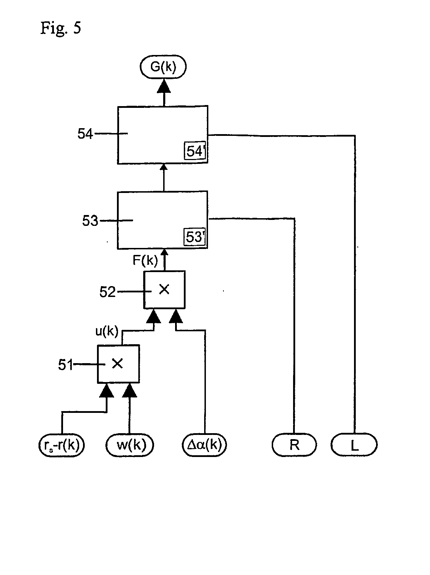

Die Summationseinheit 5 zur rekursiven Fehlerschätzung nach Fig. 4 ist in Fig. 5 beispielhaft näher ausgeführt und wird im folgenden ausführlich erläutert. Zunächst wird die Regeldifferenz $r_S$ - r(k) mit w(k), stellvertretend für x, y, $x^2$ - $y^2$ oder x * y , multipliziert, um u(k) zu erhalten (Block 51). Die gewichtete Fehlergröße u(k) wird wiederum mit der Winkeldifferenz $\Delta\alpha$(k) multipliziert (Block 52). Das Ergebnis ist der Flächenwert F(k), der nun zum Fehlerkorrekturwert G(k) im Block 53 aufsummiert wird. Dafür ist ein erster Speicher 53' nötig, der eine Resetfunktion (Reset R) aufweist, die zyklisch, z.B. ein mal pro Signalperiode, genutzt wird. Ein weiterer Block 54 übernimmt zu definierten Zeitpunkten (Latch L) die Werte des ersten Speichers aus Block 53 und addiert diese zu den alten, im Block 54 bereits gespeicherten Korrekturwerten hinzu und gibt diese an die Korrektureinheit weiter. Block 54 beinhaltet also einen weiteren Speicher 54'. Der gleiche Vorgang wird nun mit teilkorrigierten Signalen $r_S$ - r(k), w(k), $\Delta\alpha$(k) wiederholt und somit werden die Spursignale iterativ verbessert.

Weitere Ausgestaltungen, die Summier-, Integrier oder andere Filtereinheiten oder Speichervorrichtungen zum Zwecke der Generierung von Korrekturwerten enthalten, sind denkbar.

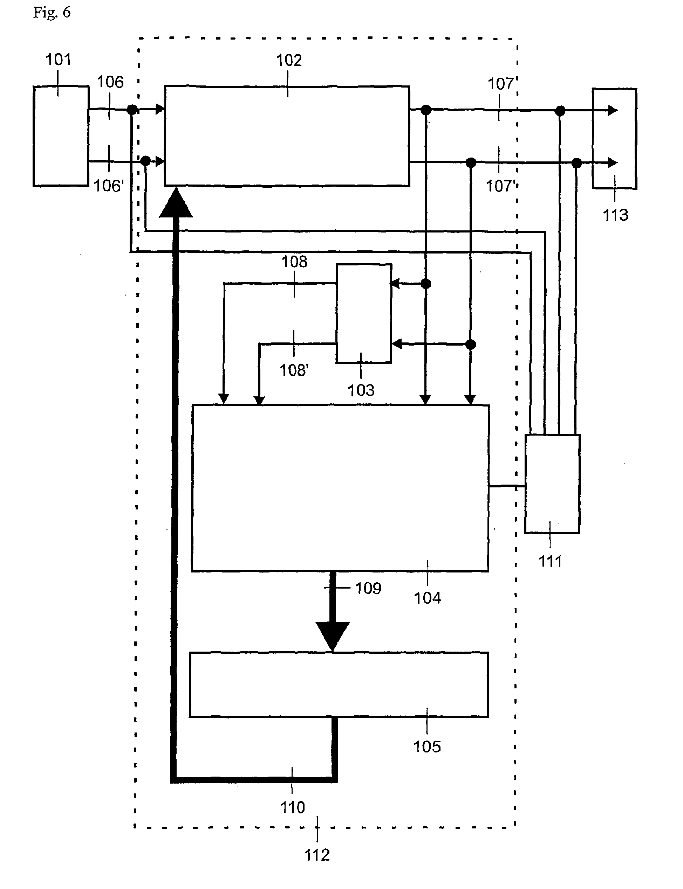

Fig. 6 zeigt ein Ausführungsbeispiel der erfindungsgemäßen Vorrichtung zur Korrektur aller Fehler mittels eines Rechners 112. 101 bezeichnet dabei einen Lagegeber als Erfassungseinrichtung für die Spursignalwerte, der zwei möglicherweise fehlerbehaftete Ausgangssignale liefert. Die Spursignale oder Gebersignale 106, 106' werden einem Korrekturglied 102 zugeführt, das die Geberfehler beseitigen soll. Ausgangssignale des Korrekturglieds 102 sind teilkorrigierte Signale 107, 107', die in einer Einheit zur Koordinatentransformation 103 in Polarkoordinaten-Signale 108, 108' gewandelt werden. Eine die erste Speichereinrichtung 104' und die zweite Speichereinrichtung 104" enthaltende Einheit 104 zur iterativen Ermittlung der Fehlergrößen ermittelt aus den Polarkoordinaten-Signalen 108, 108' und aus den teilkorrigierten Signalen 107, 107' die Fehlerkorrekturwerte G repräsentierende Signale 109, welche in einer nachfolgenden Berechnungseinheit 105 zu Korrektursignalen 110 aufbereitet werden, um die Signalkorrektur im Korrekturglied 102 durchführen zu können. Die Recheneinheit 104 wird dabei von einer Steuereinheit 111 unter anderem zur Steuerung der Speicherbelegung gesteuert.

Die Erfindung ist nicht auf die obigen Ausführungsbeispiele beschränkt, die lediglich der allgemeinen Erläuterung des Kerngedankens der Erfindung dienen. Im Rahmen des Schutzumfangs können das erfindungsgemäße Verfahren und die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

**Patentansprüche**

**1.** Verfahren zur Korrektur systematischer Spursignalfehler von inkrementellen Positions- oder Drehwinkelgebem die zumindest zwei um einen Phasenwinkel verschobene, näherungsweise sinusförmige periodengleiche Spursignale erzeugen, mit den Schritten:

a) Erfassung der Spursignalwerte ($x_k$, $y_k$) im aktuellen Meßzyklus (k);
b) Korrektur der erfaßten Spursignalwerte ($x_k$, $y_k$) mit einem gespeicherten Fehlerkorrekturwert ($G_{P-1}$) zum Erhalten von korrigierten Spursignalwerten ($x_k$', $y_k$');
c) Transformation der korrigierten Spursignalwerte ($x_k$', $y_k$') in Polarkoordinatenwerte ($r_k$; $j_k$);
d) Bildung eines Fehlerradius' ($r_{ek}$);
e) Gewichtung des Fehlerradius' ($r_{ek}$) mit einer Bewertungsgröße ($w_k$) zum Erhalten einer gewichteten Fehlergröße ($u_k$);
f) Bildung einer Winkeldifferenz ($Dj_k$) aus dem aus der Transformation erhaltenen Winkel ($j_k$) und einem in einem vorhergehenden Meßzyklus (k-1) erhaltenen und gespeicherten Winkel ($j_{k-1}$);
g) Multiplikation der gewichteten Fehlergröße ($u_k$) mit der Winkeldifferenz ($Dj_k$) zum Erhalten eines Flächenwerts ($F_k$);
h) Addition des ermittelten Flächenwerts ($F_k$) und eines in einem vorhergehenden Meßzyklus (k-1) gespeicherten Flächensummenwerts ($F_{S\,k-1}$) zur Bildung eines neuen Flächensummenwerts ($F_{S\,k}$);
i) Speichern des neuen Flächensummenwerts ($F_{S\,k}$) und des Winkels ($j_k$);
k) Wiederholen der Schritte a) bis i) bis zum Ablauf eines Korrekturintervalls (P), das eine oder mehrere Perioden der Spursignale umfasst;
l) Speichern des Flächensummenwerts ($F_{S\,k}$) am Ende des Korrekturintervalls (P) als neuen Fehlerkorrekturwert ($G_p$).

**2.** Verfahren nach Anspruch 1,

**gekennzeichnet durch** den weiteren Schritt:
m) Wiederholen der Schritte a) bis 1) für das nächste Korrekturintervall (P+1).

3. Verfahren zur Korrektur systematischer Spursignalfehler von inkrementellen Positions- oder Drehwinkelgebem die zumindest zwei um einen Phasenwinkel verschobene, näherungsweise sinusförmige periodengleiche Spursignale erzeugen, mit den Schritten:

a) Erfassung der Spursignalwerte ($x_k$, $y_k$) im aktuellen Meßzyklus (k);
b) Korrektur der erfaßten Spursignalwerte ($x_k$, $y_k$) mit einem gespeicherten Fehlerkorrekturwert ($G_{P-1}$) zum Erhalten von korrigierten Spursignalwerten ($x_k'$, $y_k'$);
c) Transformation der korrigierten Spursignalwerte ($x_k'$, $y_k'$) in Polarkoordinatenwerte ($r_k$; $j_k$);
d) Bildung eines Fehlerradius' ($r_{ek}$);
e) Gewichtung des Fehlerradius' ($r_{ek}$) mit einer Bewertungsgröße ($w_k$) zum Erhalten einer gewichteten Fehlergröße ($u_k$);
f) Bildung einer Winkeldifferenz ($Dj_k$) aus dem aus der Transformation erhaltenen Winkel ($j_k$) und einem in einem vorhergehenden Meßzyklus (k-1) erhaltenen und gespeicherten Winkel ($j_{k-1}$);
g) Multiplikation der gewichteten Fehlergröße ($u_k$) mit der Winkeldifferenz ($Dj_k$) zum Erhalten eines Flächenwerts ($F_k$);
h) Addition des ermittelten Flächenwerts ($F_k$) und eines in einem vorhergehenden Meßzyklus (k-1) gespeicherten Flächensummenwerts ($F_{S\,k-1}$) zur Bildung eines neuen Flächensummenwerts ($F_{S\,k}$);
i) Speichern des neuen Flächensummenwerts ($F_{S\,k}$) und des Winkels ($j_k$);
k) Wiederholen der Schritte a) bis i) bis zum Ablauf eines Korrekturintervalls (P), das eine oder mehrere Perioden der Spursignale umfasst;
l1) Addieren des Flächensummenwerts ($F_{S\,k}$) am Ende des Korrektuhntervalls (P) zum gespeicherten Fehlerkorrekturwert ($G_{p-1}$), um einen neuen Fehlerkorrekturwert ($G_P$) zu erhalten.;
l2) Speichern des neuen Fehlerkorrekturwerts ($G_P$).

4. Verfahren nach Anspruch 3,
**gekennzeichnet durch** die weiteren Schritte:

13) Zurücksetzen des Flächensummenwerts ($F_{S\,k}$) auf Null;
m) Wiederholen der Schritte a) bis 13) für das nächste Korrekturintervall (P+1).

5. Verfahren zur Korrektur systematischer Spursignalfehler gemäß einem der vorhergehenden Ansprüche,
**dadurch gekennzeichnet,**
**daß** zur Korrektur von Phasenfehlern der Spursignale die Bewertungsgröße ($w_k$) durch das Produkt der korrigierten Spursignalwerte ($x_k'$, $y_k'$) gebildet wird.

6. Verfahren nach einem der Ansprüche 1 bis 4,
**dadurch gekennzeichnet,**
**daß** zur Korrektur von Offsetfehlern der Spursignale die Bewertungsgröße ($w_k$) dem jeweiligen korrigierten Spursignalwert ($x_k'$ bzw. $y_k'$) entspricht.

7. Verfahren nach einem der Ansprüche 1 bis 4,
**dadurch gekennzeichnet,**
**daß** zur Korrektur von Amplitudenfehlern der Spursignale gleichzeitig zwei Fehlerkorrekturwerte ($G_1$, $G_2$) ermittelt werden, wobei zur Ermittlung des ersten Fehlerkorrekturwerts ($G_1$) die Bewertungsgröße ($w_{k1}$) aus einer linearen Funktion der Quadrate der korrigierten Spursignalwerte ($x_k'^2$ und $y_k'^2$) gebildet wird ($W_{k1} = a \cdot x_k'^2 + b \cdot y_k'^2 + c$) und wobei zur Ermittlung des zweiten Fehlerkorrekturwerts ($G_2$) die Bewertungsgröße ($w_{k2}$) gleich eins gesetzt wird ($w_{k2} = 1$).

8. Verfahren nach Anspruch 7,
**dadurch gekennzeichnet,**
**daß** die lineare Funktion durch eine Differenz der Quadrate der Spursignalwerte gebildet wird ($w_{k1} = x_k'^2 - y_k'^2$).

9. Verfahren nach einem der vorhergehenden Ansprüche,
**dadurch gekennzeichnet,**
**dass** die Korrekturen von Phasenfehler, Offsetfehler und Amplitudenfehler zeitlich parallel durchgeführt werden.

**10.** Verfahren nach einem der vorhergehenden Ansprüche,
**dadurch gekennzeichnet,**
**dass** die Korrekturen von Phasenfehler, Offsetfehler und Amplitudenfehler zeitlich nacheinander durchgeführt werden.

**11.** Verfahren nach einem der vorhergehenden Ansprüche,
**dadurch gekennzeichnet,**
**daß** die Transformation von kartesischen Koordinaten in Polarkoordinaten im Schritt c) mittels eines CORDIC-Algorithmus durchgeführt wird.

**12.** Verfahren nach einem der vorhergehenden Ansprüche,
**dadurch gekennzeichnet,**
**daß** die Spursignalwerte einem analog-/digital-Umsetzer mit Sigma-Delta-Charakteristik zugeführt werden und dass die Korrektur der Spursignalwerte mit von diesem Umsetzer gelieferten Werten erfolgt.

**13.** Verfahren nach einem der vorhergehenden Ansprüche,
**dadurch gekennzeichnet,**
**daß** die Fehlerkorrekturwerte ($G_P$) positionsabhängig in einer Tabelle abgespeichert werden und daß die Korrektur in einem oder mehreren folgenden Meßzyklen anhand der gespeicherten Tabellenwerte durchgeführt wird.

**14.** Verfahren nach einem der vorhergehenden Ansprüche,
**dadurch gekennzeichnet,**
**daß** die Bildung des Fehlerradius' ($r_{ek}$) durch eine Differenz zwischen einem vorgegebenen Soll-Radius ($r_S$) und dem aus der Transformation im Schritt c) erhaltenen Radius ($r_k$) erfolgt.

**15.** Verfahren nach einem der Ansprüche 1 bis 13,
**dadurch gekennzeichnet,**
**daß** die Bildung des Fehlerradius' ($r_{ek}$) durch eine Filterung des Radius' (r) erfolgt.

**16.** Vorrichtung zur Korrektur von systematischen Spursignalfehlern von inkrementellen Positions- oder Drehwinkelgebem mit

  - zumindest einer Erfassungseinrichtung (101) für die Spursignalwerte,
  - einer ersten Speichereinrichtung (104') zur Speicherung der Fehlersummenwerte ($F_{S\,k}$),
  - einer zweiten Speichereinrichtung (104") zur Speicherung der Fehlerkorrekturwerte (G),
  - einem Rechner (112) zur Verarbeitung und zur Korrektur der Spursignalwerte,
  - einer Steuereinheit (111) zur Steuerung der Speicherbelegung,
  - einer Ausgabe (113) für die korrigierten Spursignalwerte,

**dadurch gekennzeichnet,**
**daß** der Rechner (112) ein Programm zur Durchführung der Schritte a) bis l) gemäß Anspruch 1 oder der Schritte a) bis l1) und l2) gemäß Anspruch 3 aufweist.

**17.** Vorrichtung nach Anspruch 16,
**dadurch gekennzeichnet,**
**daß** die Steuereinheit (111) einen Periodenzähler umfaßt.

**18.** Vorrichtung nach Anspruch 17,
**dadurch gekennzeichnet,**
**daß** der Periodenzähler als Nulldurchgangszähler ausgebildet ist, der die Nulldurchgänge der Spursignalwerte erfaßt.

**Claims**

**1.** Method for correcting systematic track signal errors of incremental position or angle of rotation sensors which generate at least two approximately sinusoidal track signals which have the same period and which are offset by a phase angle, comprising the steps:

a) detecting the track signal values ($x_k$, $y_k$) in the current measuring cycle (k);

b) correcting the detected track signal values ($x_k$, $y_k$), using a stored error correction value ($G_{P-1}$) to obtain corrected track signal values ($x_k'$, $y_k'$);

c) transforming the corrected track signal values ($x_k'$, $y_k'$) into polar coordinate values ($r_k$; $j_k$);

d) forming an error radius ($r_{ek}$);

e) weighting the error radius ($r_{ek}$) with a weighting value ($w_k$) to obtain a weighted error variable ($u_k$);

f) forming an angular difference ($Dj_k$) from the angle ($j_k$) obtained from the transformation and an angle ($j_{k-1}$) obtained and stored in a preceding measuring cycle (k-1);

g) multiplying the weighted error variable ($u_k$) by the angular difference ($Dj_k$) to obtain an area value ($F_k$);

h) adding the determined area value ($F_k$) and a cumulative area value ($F_{S\,k-1}$) stored in a preceding measuring cycle (k-1) to form a new cumulative area value ($F_{Sk}$);

i) storing the new cumulative area value ($F_{Sk}$) and the angle ($j_k$);

k) repeating the steps a) to i) until a correction interval (P) comprising one or more periods of the track signals has passed;

l) storing the cumulative area value ($F_{Sk}$) at the end of the correction interval (P) as the new error correction value ($G_p$).

2. Method according to claim 1, **characterised by** the further step:

   m) repeating the steps a) to l) for the next correction interval (P+1).

3. Method for correcting systematic track signal errors of incremental position or angle of rotation sensors which generate at least two approximately sinusoidal track signals which have the same period and which are offset by a phase angle, comprising the steps:

   a) detecting the track signal values ($x_k$, $y_k$) in the current measuring cycle (k);

   b) correcting the detected track signal values ($x_k$, $y_k$), using a stored error correction value ($G_{P-1}$) to obtain corrected track signal values ($x_k'$, $y_k'$);

   c) transforming the corrected track signal values ($x_k'$, $y_k'$) into polar coordinate values ($r_k$; $j_k$);

   d) forming an error radius ($r_{ek}$);

   e) weighting the error radius ($r_{ek}$) with a weighting value ($w_k$) to obtain a weighted error variable ($u_k$);

   f) forming an angular difference ($Dj_k$) from the angle ($j_k$) obtained from the transformation and an angle ($j_{k-1}$) obtained and stored in a preceding measuring cycle (k-1);

   g) multiplying the weighted error variable ($u_k$) by the angular difference ($Dj_k$) to obtain an area value ($F_k$);

   h) adding the determined area value ($F_k$) and a cumulative area value ($F_{S\,k-1}$) stored in a preceding measuring cycle (k-1) to form a new cumulative area value ($F_{Sk}$);

   i) storing the new cumulative area value ($F_{Sk}$) and the angle ($j_k$);

   k) repeating the steps a) to i) until a correction interval (P) comprising one or more periods of the track signals has passed;

   l1) adding the cumulative area value ($F_{Sk}$) at the end of the correction interval (P) to the stored error correction value ($G_{p-1}$) in order to obtain a new error correction value ($G_p$);

   l2) storing the new error correction value ($G_p$).

4. Method according to claim 3, **characterised by** the further steps:

   l3) resetting the cumulative area value ($F_{sk}$) to zero;

   m) repeating the steps a) to 13) for the next correction interval (P+1).

5. Method for correcting systematic track signal errors according to any one of the preceding claims, **characterised in that** to correct phase errors of the track signals, the weighting value ($w_k$) is formed by the product of the corrected track signal values ($x_k'$, $y_k'$).

6. Method according to any one of claims 1 to 4, **characterised in that** to correct offset errors of the track signals, the weighting value ($w_k$) corresponds to the respective corrected track signal value ($x_k'$ or $y_k'$).

7. Method according to any one of claims 1 to 4, **characterised in that** to correct amplitude errors of the track signals, two error correction values ($G_1$, $G_2$) are determined simultaneously, wherein, to determine the first error correction value ($G_1$), the weighting value ($w_{k1}$) is formed from a linear function of the squares of the corrected track signal

values ($x_k'^2$ and $y_k'^2$) ($W_{k1} = a \cdot x_k'^2 + b \cdot y_k'^2 + c$) and wherein to determine the second error correction value ($G_2$), the weighting value ($w_{k2}$) is set at equal to one ($w_{k2} = 1$).

8. Method according to claim 7, **characterised in that** the linear function is formed by a difference of the squares of the track signal values ($w_{k1} = x_k'^2 - y_k'^2$).

9. Method according to any one of the preceding claims, **characterised in that** the corrections of phase errors, offset errors and amplitude errors are carried out in parallel with respect to time.

10. Method according to any one of the preceding claims, **characterised in that** the corrections of phase errors, offset errors and amplitude errors are carried out consecutively in terms of time.

11. Method according to any one of the preceding claims, **characterised in that** the transformation of cartesian coordinates into polar coordinates is carried out in step c) by means of a CORDIC algorithm.

12. Method according to any one of the preceding claims, **characterised in that** the track signal values are supplied to an analogue-to-digital converter with a sigma-delta characteristic and **in that** the correction of the track signal values takes place using values supplied by this converter.

13. Method according to any one of the preceding claims, **characterised in that** the error correction values ($G_p$) are stored in a table as a function of position and **in that** the correction is carried out in one or more following measuring cycles using the stored table values.

14. Method according to any one of the preceding claims, **characterised in that** the formation of the error radius ($r_{ek}$) takes place by means of a difference between a predetermined desired radius ($r_S$) and the radius ($r_k$) obtained from the transformation in step c).

15. Method according to any one of claims 1 to 13, **characterised in that** the formation of the error radius ($r_{ek}$) takes place by means of a filtering of the radius ($r$).

16. Device for correcting systematic track signal errors of incremental position or angle of rotation sensors, comprising:

   - at least one detection device (101) for the track signal values,
   - a first memory device (104') for storing the cumulative error values ($F_{Sk}$),
   - a second memory device (104") for storing the error correction values (G),
   - a computer (112) for processing and correcting the track signal values,
   - a control unit (111) for controlling the memory allocation,
   - an output (113) for the corrected track signal values,

   **characterised in that** the computer (112) has a program for carrying out the steps a) to l) according to claim 1 or the steps a) to l1) and l2) according to claim 3.

17. Device according to claim 16, **characterised in that** the control unit (111) comprises a period counter.

18. Device according to claim 17, **characterised in that** the period counter is configured as a zero crossing counter, which detects the zero crossings of the track signal values.

**Revendications**

1. Procédé de correction d'erreurs systématiques de signaux de piste dans des capteurs de position ou d'angle de rotation incrémentaux, qui produisent au moins deux signaux de piste de même période et approximativement de forme sinusoïdale décalés d'un angle de phase, comprenant les étapes suivantes :

   a) détection des valeurs de signaux de piste ($x_k$, $y_k$) dans le cycle de mesure actuel (k) ;
   b) correction des valeurs de signaux de piste détectés ($x_k$, $y_k$) avec une valeur de correction d'erreur ($G_{P-1}$) mémorisée pour obtenir des valeurs de signaux de piste corrigées ($x_k'$, $y_k'$) ;
   c) transformation des valeurs de signaux de piste corrigées ($x_k'$, $y_k'$) en valeur de coordonnées polaires ($r_k$ ; $j_k$) ;

d) formation d'un rayon d'erreur ($r_{ek}$) ;

e) pondération du rayon d'erreur ($r_{ek}$) avec une valeur d'évaluation ($w_k$) pour obtenir une grandeur d'erreur pondérée ($u_k$) ;

f) formation d'une différence angulaire ($D_{jk}$) à partir de l'angle ($j_k$) obtenu de la transformation et d'un angle ($j_{k-1}$) obtenu dans un cycle de mesure précédent (k-1) et mémorisé ;

g) multiplication de la grandeur erreur pondérée ($u_k$) avec la différence angulaire ($D_{jk}$) pour obtenir une valeur de surface ($F_k$) ;

h) addition de la valeur de surface déterminée ($F_k$) et d'une valeur de somme de surface ($F_{Sk-1}$) mémorisée dans un cycle de mesure précédent (k-1) pour former une nouvelle valeur de somme de surface ($F_{Sk}$) ;

i) mémorisation de la nouvelle valeur de somme de surface ($F_{Sk}$) et de l'angle ($j_k$) ;

k) répétition des étapes a) à i) jusqu'à écoulement d'un intervalle de correction (P) qui comprend une ou plusieurs périodes des signaux de piste ;

l) mémorisation de la valeur de somme de surface ($F_{Sk}$) à la fin de l'intervalle de correction (P) à titre de nouvelle valeur de correction d'erreur ($G_p$).

**2.** Procédé selon la revendication 1,
**caractérisé par** l'étape supplémentaire suivante :

m) répétition des étapes a) à 1) pour l'intervalle de correction suivant (P+1).

**3.** Procédé de correction d'erreurs systématiques de signaux de piste dans des capteurs de position ou d'angle de rotation incrémentaux qui produisent au moins deux signaux de piste de même période et approximativement de forme sinusoïdale décalés d'un angle de phase, comprenant les étapes suivantes :

a) détection des valeurs de signaux de piste ($x_k$, $y_k$) dans le cycle de mesure actuel (k) ;

b) correction des valeurs de signaux de piste détectés ($x_k$, $y_k$) avec une valeur de correction d'erreur ($G_{P-1}$) mémorisée pour obtenir des valeurs de signaux de piste corrigées ($x_k'$, $y_k'$) ;

c) transformation des valeurs de signaux de piste corrigées ($x_k'$, $y_k'$) en valeur de coordonnées polaires ($r_k$ ; $j_k$) ;

d) formation d'un rayon d'erreur ($r_{ek}$) ;

e) pondération du rayon d'erreur ($r_{ek}$) avec une valeur d'évaluation ($w_k$) pour obtenir une grandeur d'erreur pondérée ($u_k$) ;

f) formation d'une différence angulaire ($D_{jk}$) à partir de l'angle ($j_k$) obtenu de la transformation et d'un angle ($j_{k-1}$) obtenu dans un cycle de mesure précédent (k-1) et mémorisé ;

g) multiplication de la grandeur erreur pondérée ($u_k$) avec la différence angulaire ($D_{jk}$) pour obtenir une valeur de surface ($F_k$) ;

h) addition de la valeur de surface déterminée ($F_k$) et d'une valeur de somme de surface ($F_{Sk-1}$) mémorisée dans un cycle de mesure précédent (k-1) pour former une nouvelle valeur de somme de surface ($F_{Sk}$) ;

i) mémorisation de la nouvelle valeur de somme de surface ($F_{Sk}$) et de l'angle ($j_k$) ;

k) répétition des étapes a) à i) jusqu'à écoulement d'un intervalle de correction (P) qui comprend une ou plusieurs périodes des signaux de piste ;

l1) addition de la valeur de somme de surface ($F_{Sk}$) à la fin de l'intervalle de correction (P) à la valeur de correction d'erreur mémorisée ($G_{p-1}$) pour obtenir une nouvelle valeur de correction d'erreur ($G_P$) ;

l2) mémorisation de la nouvelle valeur de correction d'erreur ($G_P$).

**4.** Procédé selon la revendication 3,
**caractérisé par** les autres étapes suivantes :

13) remise à zéro de la valeur de somme de surface ($F_{Sk}$) ;

m) répétition des étapes a) à 13) pour l'intervalle de correction suivant (P+1).

**5.** Procédé de correction d'erreurs systématiques de signaux de piste selon l'une des revendications précédentes,
**caractérisé en ce que** pour la correction d'erreur de phase des signaux de piste, on forme la grandeur d'évaluation ($w_k$) par le produit des valeurs de signaux de piste corrigés ($x_k'$, $y_k'$).

**6.** Procédé selon l'une des revendications 1 à 4,
**caractérisé en ce que**, pour la correction d'erreur d'offset des signaux de piste, la grandeur d'évaluation ($w_k$) correspond à la valeur de signal de piste corrigée respective ($x_k'$ ou $y_k'$).

**7.** Procédé selon l'une des revendications 1 à 4,
**caractérisé en ce que**, pour la correction d'erreur d'amplitude des signaux de piste, on détermine simultanément deux valeurs de correction d'erreur ($G_1$, $G_2$), dans lequel pour la détermination de la première valeur de correction d'erreur ($G_1$), on forme la grandeur d'évaluation ($w_{k1}$) à partir d'une fonction linéaire des carrés des valeurs de signaux de piste corrigées ($x_k'^2$ et $y_k'^2$) ($W_{k1} = a \cdot x_k'^2 + b \cdot y_k'^2 + c$) et dans lequel, pour déterminer la seconde valeur de correction d'erreur ($G_2$) on met la grandeur d'évaluation ($w_{k2}$) à la valeur un ($w_{k2} = 1$).

**8.** Procédé selon la revendication 7,
**caractérisé en ce que** la fonction linéaire est formée par une différence des carrés des valeurs de signaux de piste ($w_{k1} = x_k'^2 - y_k'^2$).

**9.** Procédé selon l'une des revendications précédentes,
**caractérisé en ce que** l'on exécute parallèlement dans le temps les corrections d'erreur de phase, d'erreur d'offset et d'erreur d'amplitude.

**10.** Procédé selon l'une des revendications précédentes,
**caractérisé en ce que** l'on exécute les unes après les autres dans le temps les corrections d'erreur de phase, d'erreur d'offset et d'erreur d'amplitude.

**11.** Procédé selon l'une des revendications précédentes,
**caractérisé en ce que** la transformation de coordonnée cartésienne en coordonnées polaires dans l'étape c) est exécutée au moyen d'un algorithme CORDIC.

**12.** Procédé selon l'une des revendications précédentes,
**caractérisé en ce que** les valeurs de signaux de piste sont admises à un convertisseur analogique/numérique avec caractéristique sigma-delta, et **en ce que** la correction des valeurs de signaux de piste a lieu avec des valeurs fournies par ce convertisseur.

**13.** Procédé selon l'une des revendications précédentes,
**caractérisé en ce que** les valeurs de correction d'erreur ($G_P$) sont mémorisées dans un tableau en fonction de la position, et **en ce que** la correction est exécutée dans un ou plusieurs cycles de mesure suivants en s'aidant des valeurs mémorisées du tableau.

**14.** Procédé selon l'une des revendications précédentes,
**caractérisé en ce que** la formation du rayon d'erreur ($r_{ek}$) a lieu en faisant une différence entre un rayon de consigne prédéterminé ($r_s$) et le rayon ($r_k$) obtenu dans l'étape c) à partir de la transformation.

**15.** Procédé selon l'une des revendications 1 à 13,
**caractérisé en ce que** la formation du rayon d'erreur ($r_{ek}$) a lieu par une filtration du rayon ($r$).

**16.** Dispositif de correction d'erreurs systématiques de signaux de piste dans des capteurs de position ou des capteurs d'angle de rotation incrémentaux, comprenant

- au moins un dispositif de détection (101) pour les valeurs de signaux de piste,
- un premier dispositif à mémoire (104') pour mémoriser les valeurs de somme d'erreur ($F_{Sk}$),
- un second dispositif à mémoire (104") pour mémoriser les valeurs de correction d'erreur (G),
- un calculateur (112) pour le traitement et pour la correction des valeurs de signaux de piste,
- une unité de commande (111) pour la commande de l'occupation en mémoire,
- un moyen de sortie (113) pour les valeurs de signaux de piste corrigées,

**caractérisé en ce que**
le calculateur (112) comprend un programme pour l'exécution des étapes a) à l) selon la revendication 1 ou les étapes a) à l1) et l2) selon la revendication 3.

**17.** Dispositif selon la revendication 16,
**caractérisé en ce que** l'unité de commande (111) comprend un compteur de périodes.

**18.** Dispositif selon la revendication 17,

**caractérisé en ce que** le compteur de périodes est réalisé sous forme de compteur de passages à zéro, qui détecte les passages à zéro des valeurs de signaux de piste.

Fig. 1

Fig. 2

| Schritt 1) | Setze ersten Speicher = Anfangswert<br>Setze zweiten Speicher = Anfangswert |

**Schritt 2)**

**WHILE**

**Schritt 3)** Einlesen der Spursignalwerte x und y

**Schritt 4)** Offset-, Amplituden- und Phasenkorrektur der Spursignalwerte x und y mit Korrekturwerten aus dem zweiten Speicher, zum Beispiel nach Gleichung 1a und 1b

**Schritt 5)** Prüfe, ob ein Nulldurchgang bei einem der Signale x und y aufgetreten ist

ja / nein

**Schritt 6)** Generiere einen Zählimpuls für den Positionsgrobwertzähler (Viertelperiodenzähler)

**Schritt 7)** Aktualisiere den Positionsgrobwertzähler (Up/Down-Counter)

**Schritt 8)** Teile den Zählerstand des Positionsgrobwertzählers durch 4 (Vollperiodenzähler)

tue nichts

**Schritt 9)** Prüfe, ob sich der Zählstand des Vollperiodenzählers geändert hat?

ja / nein

tue nichts

**Schritt 10)** Übertrage den Inhalt des ersten Speichers in den zweiten Speicher

**Schritt 11)** Transformiere die kartesischen Spursignalwerte in Polarkoordinaten mit dem Radius r und dem Winkel $\varphi$ nach den Gleichungen 2 und 3

**Schritt 12)** Berechne die Regeldifferenz nach Gleichung 5

**Schritt 13)** Berechne die Winkeldifferenz nach Gleichung 6

**Schritt 14)** Berechne die Bewertungsfunktionen nach einer der Gleichungen 7a bis 7e

**Schritt 15)** Berechne die gewichtete Fehlergröße nach Gleichung 8 für alle Fehlergrößen

**Schritt 16)** Berechne die Flächenwerte nach Gleichung 9 und addiere das Ergebnis zum Inhalt des ersten Speichers nach einer der Gleichungen 4a bis 4e

Fig. 3

| | |
|---|---|
| Schritt 1) | Setze ersten Speicher = Anfangswert<br>Setze zweiten Speicher = Anfangswert |

**Schritt 2)**

<table>
<tr><td rowspan="20">W<br>H<br>I<br>H<br>L<br>E</td></tr>
<tr><td colspan="2">Schritt 3)    Einlesen der Spursignalwerte x und y</td></tr>
<tr><td colspan="2">Schritt 4)    Offset-, Amplituden- und Phasenkorrektur der Spursignalwerte x und y mit Korrekturwerten aus dem zweiten Speicher, zum Beispiel nach Gleichung 1a und 1b</td></tr>
</table>

Schritt 5)   Prüfe, ob ein Nulldurchgang bei einem der Signale x und y aufgetreten ist

ja      nein

| | | |
|---|---|---|
| Schritt 6) | Generiere einen Zählimpuls für den Positionsgrobwertzähler (Viertelperiodenzähler) | |
| Schritt 7) | Aktualisiere den Positionsgrobwertzähler (Up/Down-Counter) | tue nichts |
| Schritt 8) | Teile den Zählerstand des Positionsgrobwertzählers durch 4 (Vollperiodenzähler) | |

Schritt 9)   Prüfe, ob sich der Zählstand des Vollperiodenzählers geändert hat?

ja      nein

| | | |
|---|---|---|
| Schritt 10) | Addiere den Inhalt des ersten Speichers zum Inhalt des zweiten | tue nichts |
| Schritt 11) | Setze den ersten Speicher auf Anfangswert | |

| | |
|---|---|
| Schritt 12) | Transformiere die kartesischen Spursignalwerte in Polarkoordinaten mit dem Radius r und dem Winkel $\varphi$ nach den Gleichungen 2 und 3 |
| Schritt 13) | Berechne die Regeldifferenz nach Gleichung 5 |
| Schritt 14) | Berechne die Winkeldifferenz nach Gleichung 6 |
| Schritt 15) | Berechne die Bewertungsfunktionen nach einer der Gleichungen 7a bis 7e |
| Schritt 16) | Berechne die gewichtete Fehlergröße nach Gleichung 8 für alle Fehlergrößen |
| Schritt 17) | Berechne die Flächenwerte nach Gleichung 9 und addiere das Ergebnis zum Inhalt des ersten Speichers nach einer der Gleichungen 4a bis 4e |

Fig. 4

x(k)     1     x_o(k)

y(k)     y_o(k)

Scaling    3    Scaling

5

4

LATCH   y   x   RESET

RESET   LATCH   cor   $r_s$-r(k)   w(k)   $\Delta\alpha$(k)

RESET   LATCH   cor   $r_s$-r(k)   w(k)   $\Delta\alpha$(k)

2

y    x

$\Delta\alpha$(k)   x*y   $x^2$–$y^2$   y   x   $r_s$-r(k)   $\alpha_o$(k)

$\alpha_o$(k)

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19849910 A1
- DE 10163504 A1
- DE 10036090 B4
- DE 10112352 A1
- EP 0489936 A
- DE 10036090 A1